# EUROPÄISCHE PATENTSCHRIFT

(11) **EP 2 062 714 B1**
(45) Veröffentlichungstag und Bekanntmachung des Hinweises auf die Patenterteilung: **26.03.2014**
(21) Anmeldenummer: 08017449.3
(22) Anmeldetag: 04.10.2008
(51) Int. Cl.: B29C 45/14

(54) **Zuführvorrichtung für Substrate sowie Spritzgussvorrichtung**
Supply device for substrates and injection moulding device
Dispositif d'alimentation pour substrats et dispositif de moulage par injection

(30) Priorität: 23.11.2007 DE 102007056812
(43) Veröffentlichungstag der Anmeldung: 27.05.2009
(73) Patentinhaber: Waldorf Technik GmbH & Co. KG, 78234 Engen (DE)
(72) Erfinder: Fuhrmann, Ralf, 78234 Engen (DE)
(74) Vertreter: Wagner, Kilian

(56) Entgegenhaltungen:
- WO-A-85/04310
- FR-A- 1 509 304
- GB-A- 2 183 198
- US-A- 4 397 625
- US-A1- 2005 287 241
- KLAUS W ET AL: "HINTERSPRITZEN VON KUNSTSTOFFOLIEN AUTOMATISIERTE FERTIGUNG EINER MOBILTELEFON OBERSCHALE" KUNSTSTOFFE, CARL HANSER VERLAG, MUNCHEN, DE, Bd. 89, Nr. 11, 1. November 1999 (1999-11-01), Seiten 88-90, XP000963691 ISSN: 0023-5563

## Beschreibung

Die Erfindung betrifft eine Zuführvorrichtung für flache Substrate wie Etiketten, insbesondere Folienetiketten gemäß dem Oberbegriff des Anspruchs 1 sowie eine Spritzgussvorrichtung, umfassend eine Zuführvorrichtung gemäß Anspruch 14.

Vorgenannte Zuführvorrichtungen finden häufig Einsatz im Bereich der Spritzgusstechnik. Sie dienen insbesondere zum automatischen Zuführen von Verpackungsetiketten, insbesondere von Folienetiketten in einen IML (In-Mould-Labeling)-Fertigungsprozess zum Herstellen von mit den Etiketten zu versehenden Verpackungsbehältern.

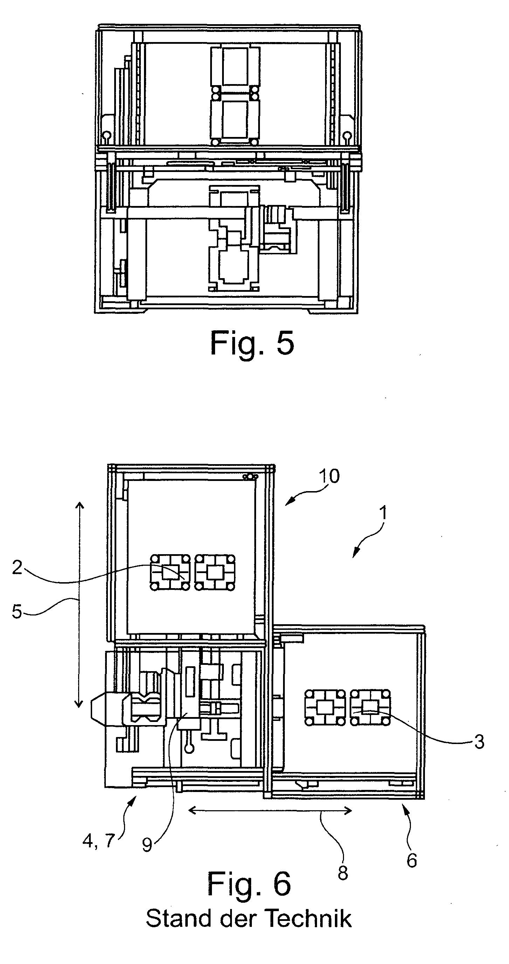

Eine typische, gattungsgemäße Zuführvorrichtung zum Einsatz in Spritzgussmaschinen ist in Fig. 6 dargestellt. Diese, zum hausinternen Stand der Technik gehörige Zuführvorrichtung 1 umfasst zwei Magazine für gestapelte Substrate, nämlich ein erstes Magazin 2 und ein zweites Magazin 3, wobei beide Magazine 2, 3 in einer gemeinsamen Arbeitsebene angeordnet sind. Das erste Magazin 2 ist zwischen einer ersten Beladeposition 10 und einer ersten Entnahmeposition 4 entlang einer linearen Bahn 5 verstellbar. Das zweite Magazin 3 ist zwischen einer zweiten Beladeposition 6 und einer zweiten Entnahmeposition 7, die der ersten Entnahmeposition 4 entspricht entlang einer linearen zweiten Bahn 8 verstellbar, wobei die beiden Bahnen 5, 8 rechtwinklig zueinander angeordnet sind. Während aus einem der Magazine 2, 3 in der Entnahmeposition 4, 7 Substrate mittels eines Greifers 9 entnommen werden, wird das jeweils andere Magazin 3, 2 in seiner Beladeposition 10, 6 aufgefüllt. Die Zuführvorrichtung gemäß Fig. 6 hat sich bewährt. Nachteilig bei der bekannten Zuführvorrichtung 1 ist der große Flächenbedarf der Zuführvorrichtung 1.

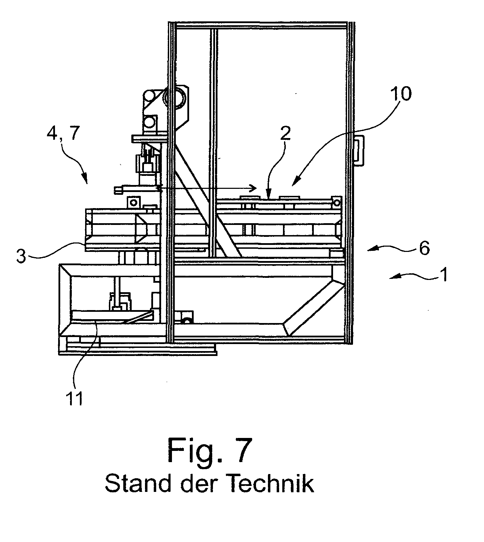

Eine weitere, zum hausinternen Stand der Technik gehörende Zuführvorrichtung 1 ist in Fig. 7 gezeigt. Diese umfasst ebenfalls ein erstes Magazin 2 und ein zweites Magazin 3. Das erste Magazin 2 kann zwischen einer ersten Beladeposition 10 und einer ersten Entnahmeposition 4 linear in einer oberen Arbeitsebene verstellt werden. Das zweite Magazin 3 kann zwischen einer unmittelbar unterhalb der ersten Beladeposition 10 angeordneten zweiten Beladeposition 6 und einer in der oberen Arbeitsebene befindlichen zweiten Entnahmeposition 7, die mit der ersten Entnahmeposition 4 identisch ist, verstellt werden. Hierzu muss das zweite Magazin 3, ausgehend von der zweiten Beladeposition 6 zunächst translatorisch in der Zeichnungsebene nach links und daraufhin mit Hilfe einer Aushubschere 11 linear nach oben in die zweite Entnahmeposition 7 verstellt werden. Anders ausgedrückt wird das zweite Magazin 3 nicht auf einer stetigen Bahn, sondern entlang zweier rechtwinklig zueinander angeordneten, gemeinsam die unstetige zweite Bahn bildenden Teilbahnabschnitten zwischen den Verstellendpositionen verstellt. Nachteilig ist der komplexe Aufbau und die Notwendigkeit eine mechanisch stabile Aushubschere vorsehen zu müssen.

Aus der GB 2 183 198 A, der US 4, 397, 625 und der WO 85/04310 A sind Zuführvorrichtungen für flache Substrate bekannt, wobei die flachen Substrate in zwei feststehenden Magazinen angeordnet und innerhalb der Magazine zu zwei unterschiedlichen, voneinander beabstandeten Entnahmepositionen verschoben werden.

Der Erfindung liegt die Aufgabe zugrunde, eine Zuführeinrichtung für flache Substrate vorzuschlagen, die einerseits einen geringen Flächenbedarf aufweist und andererseits einfach aufgebaut ist. Ferner besteht die Aufgabe darin eine Spritzgussvorrichtung mit einer entsprechend optimierten Zuführvorrichtung vorzuschlagen.

Diese Aufgabe wird hinsichtlich der Zuführvorrichtung mit den Merkmalen des Anspruchs 1 und hinsichtlich der Spritzgussvorrichtung mit den Merkmalen des Anspruchs 14 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, die erste und die zweite Entnahmeposition in vertikaler Richtung beabstandet anzuordnen, um die Flächenausdehnung der Zuführvorrichtung zu minimieren. Um einen möglichst einfachen Aufbau der Zuführvorrichtung zu gewährleisten, sind beide Magazine mit ihren darin bevorzugt gestapelt angeordneten flachen Substraten jeweils entlang einer stetigen Bahn zwischen ihrer jeweiligen Beladeposition, und ihrer jeweiligen Entnahmeposition, in der Substrate insbesondere mittels einer Handhabungsvorrichtung entnommen werden, verstellbar, wobei die Bahnen einen Winkel miteinander einschließen, also nicht parallel zueinander angeordnet sind. In ihren Beladepositionen können die Magazine mit flachen Substraten aufgefüllt werden, während die flachen Substrate in der/den Entnahmeposition/en, insbesondere von einer Handhabungsvorrichtung, entnommen werden und beispielsweise mit geeigneten Transportmitteln zu einer Spritzgussform transportiert werden. Unter einer stetigen Bahn ist insbesondere ein Bahnverlauf ohne winklig zueinander angeordnete Teilbahnabschnnitte, insbesondere ohne rechtwinklig zu einander angeordnete Bahnabschnitte zu verstehen. Es liegt im Rahmen der Erfindung zumindest eine der Bahnen mit einem bogenförmigen, beispielsweise parabelförmigen Verlauf auszubilden. Bevorzugt ist jedoch eine Ausführungsform der Erfindung, bei der zumindest eine der Bahnen, vorzugsweise beide Bahnen einen linearen Verlauf aufweist/aufweisen. Bei stetig verlaufenden Bahnen kann mit Vorteil auf das Vorsehen einer komplex aufgebauten und kostenintensiven Aushubschere mit Vorteil verzichtet werden. Ferner liegt es im Rahmen der Erfindung mehrere erste und mehrere zweite Magazine nebeneinander anzuordnen.

Von besonderem Vorteil ist eine Ausführungsform der Zuführeinrichtung, bei der die Bahnen, entlang derer die Magazine verfahren können in einer gemeinsamen Vertikalebene angeordnet sind. Bei einer derartigen Anordnung kann der Flächenbedarf auf eine absolutes Minimum reduziert werden. Von besonderem Vorteil ist es, wenn die erste und die zweite Beladeposition zum Beladen des ersten bzw. zweiten Magazins unmittelbar übereinander angeordnet sind, sodass beide Magazine aus einer gemeinsamen Beladerichtung beladen werden können.

Um auf einfache Weise zu ermöglichen, dass aus beiden, vorzugsweise jeweils auf einem Magazintisch angeordneten, Magazinen Substrate von einer gemeinsamen Handhabungsvorrichtung (Greifer) entnommen werden können, ist in Weiterbildung der Erfindung vorgesehen, dass die erste Entnahmeposition der zweiten Entnahmeposition entspricht. Anders ausgedrückt weist die Zuführvorrichtung lediglich eine gemeinsame Entnahmeposition auf, sodass eine Handhabungsvorrichtung nicht zwei beabstandete, sondern lediglich eine einzige Entnahmeposition zum Entnehmen von Substraten ansteuern muss.

In Weiterbildung der Erfindung ist mit Vorteil vorgesehen, dass der Winkel α zwischen den beiden Bahnen aus einem Wertebereich zwischen etwa 1° und etwa 179° gewählt ist. Bevorzugt beträgt der Winkel α etwa 10 ° bis etwa 100°. Besonders bevorzugt ist eine Ausführungsform der Erfindung, bei der der Winkel α zwischen den beiden Bahnen mit jeweils einem stetigen Verlauf etwa zwischen 20° und etwa 60°, vorzugsweise zwischen etwa 25° und etwa 45° gewählt ist. Insbesondere ist bevorzugt, dass der Winkel α kleiner ist als 90°. Bevorzugt sind beide Magazine derart positioniert, dass sie in jeder Verstellposition, zumindest jedoch in ihrer Entnahme- und Beladeposition horizontal ausgerichtet sind.

In Hinblick auf eine optimierte Bedienbarkeit der Zuführeinrichtung, insbesondere in Hinblick auf eine gute Beladbarkeit der beiden Magazine ist eine Ausführungsform bevorzugt, bei der die beiden Bahnen jeweils unter einem Winkel von α zu einer Horizontalebene verlaufen. Bevorzugt befindet sich diese Horizontalebene in einer Höhe zwischen etwa 1m und etwa 1,50m über dem Boden.

Zur Realisierung eines möglichst einfachen Aufbaus der Zuführvorrichtung ist eine Ausführungsform von Vorteil, bei der jedem Magazin jeweils ein Linearantrieb, insbesondere eine pneumatische Kolben-Zylindereinheit, zugeordnet ist. Es ist auch eine Ausführungsform mit einem elektromotorischen Verstellantrieb realisierbar.

Um die Arbeitssicherheit zu erhöhen, ist in Weiterbildung der Erfindung mindestens ein Schutzschieber vorgesehen, der zwischen einer Öffnungsposition und einer Schließposition (Schutzposition) verstellbar ist, wobei sich der mindestens eine Schutzschieber in seiner Schließposition bevorzugt axial zwischen mindestens einer Entnahme- und einer Entladeposition befindet, sodass eine Bedienperson beim Beladen eines Magazins nicht in Kontakt mit einer Handhabungsvorrichtung zum Entnehmen von Substraten in der Entnahmeposition kommen kann. Bevorzugt sind zwei synchronverschwenkbare Schutzschieber vorgesehen, die besonders bevorzugt in einer gemeinsamen Vertikalebene verstellbar sind, die bevorzugt von den stetigen Bahnen, entlang derer die Magazine verstellt werden können, gekreuzt wird.

Zur weiteren Erhöhung der Arbeitssicherheit ist in Weiterbildung der Erfindung vorgesehen, dass die Entnahmepositionen in einem, vorzugsweise gemeinsamen Schutzraum angeordnet sind, wobei der Schutzraum mindestens ein (automatisch) verriegelbares Öffnungselement aufweist, insbesondere eine Tür, wobei das Öffnungselement zum Beladen eines Magazins geöffnet werden muss. Dabei ist der Verriegelungsmechanismus für das Öffnungselement bevorzugt derart gesteuert, dass während des Betriebs eine Entriegelung des Öffnungselementes nur für den Fall erfolgt, dass der mindestens eine Schutzschieber sich in seiner Schließposition befindet. Es ist auch denkbar, ein sich automatisch öffnendes Öffnungselement vorzusehen, wobei das Öffnungselement sich bevorzugt während des Betriebs der Zuführvorrichtung nur dann automatisch öffnet, wenn der mindestens eine Schutzschieber in seine Schließ-, d.h. Schutzposition verfahren ist. Bevorzugt ist der Schutzraum zumindest teilweise von einer transparenten Umfangswand begrenzt. Zusätzlich oder alternativ kann das Öffnungselement, insbesondere die Tür, zumindest abschnittsweise transparent ausgebildet sein, um die Funktion der Zuführvorrichtung von außen überwachen zu können.

Damit eine Handhabungsvorrichtung, die bevorzugt ein Substrat mit Hilfe eines Saugnapfes aus einem Magazin in dessen Entnahmeposition entnimmt, zum Entnehmen von Substraten immer in die gleiche Position verfahren werden kann, ist in Weiterbildung der Erfindung vorgesehen, dass der gemeinsamen Entnahmeposition ein Substratanhubmechanismus zugeordnet ist, der die in dem in der Entnahmeposition befindlichen Magazin angeordneten, insbesondere gestapelten, Substrate ein Stück weit anhebt, die Substrate also in Richtung der Handhabungsvorrichtung drückt, sodass diese Substrate immer in derselben Position - unabhängig vom Füllstand des Magazins - entnehmen kann.

Um eine möglichst platzsparende Anordnung der stetig verlaufenden Bahnen der Magazine zu ermöglichen, ist in Weiterbildung der Erfindung vorgesehen, dass der Substratanhubmechanismus zwischen einer Arbeitsposition, in der er, vorzugsweise von unten in das in der Entnahmeposition befindliche Magazin eingreifen kann, und einer Parkposition verstellbar, vorzugsweise verschwenkbar, ist, wobei der Substratanhubmechanismus bevor ein Magazin in die Entnahmeposition einfährt oder aus dieser herausfährt aus der Arbeitsposition in die Parkposition verstellt wird. Neben einer verschwenkbar gelagerten Anordnung des Substratanhubmechanismus ist auch, insbesondre bei ausreichender Bodenfreiheit, eine lineare Verstellbewegung realisierbar. Bevorzugt ist der Substratanhubmechanismus unterhalb der geimensamen Entnahmeposition angeordnet.

Von besonderem Vorteil ist eine Ausführungsform, bei der dem Substratanhubmechanismus, genauer dem Verstellmechanismus des Substratanhubmechanismus zum Verstellen des Substratanhubmechanismus zwischen seiner Arbeitsposition und seiner Parkposition, eine Steuerung zugeordnet ist, die derart ausgebildet ist, dass der Substratanhubmechanismus nur beim Verstellen desjenigen Magazins in die Entnahmeposition oder aus der Entnahmeposition heraus verstellt wird, dessen Beladeposition die untere Beladeposition ist. Ist also beispielsweise die erste Beladeposition oberhalb der zweiten Beladeposition angeordnet, so verschwenkt der Substratanhubmechanismus nur dann in seine Parkposition, wenn das zweite Magazin in seine Entnahmeposition oder aus dieser heraus verstellt wird. Da die erste Bahn bei der beschriebenen Ausführungsform oberhalb der zweiten Bahn angeordnet ist, kann ein Verschwenken des Substratanhubmechanismus beim Ein- und Ausfahren des ersten Magazins in die Entnahmeposition aus Platzgründen mit Vorteil unterbleiben.

Von besonderem Vorteil ist eine Ausführungsform der Zuführvorrichtung, bei der diese eine Handhabungsvorrichtung zum Entnehmen von flachen Substraten aus dem ersten und/oder dem zweiten Magazin, vorzugsweise in einer gemeinsamen Entnahmeposition der Magazine aufweist. Bevorzugt umfasst die Handhabungsvorrichtung einen Saug-Greifer zum Entnehmen des jeweils obersten Substrates.

Die Erfindung führt ferner auf eine Spritzgussvorrichtung mit mindestens einer zuvor beschriebenen Zuführvorrichtung.

Dabei dient die Zuführvorrichtung bevorzugt zum Bereitstellen von Verpackungsetiketten (flachen Substraten) in einem IML (In-Moud-Labeling)-Fertigungsprozess, bei dem die insbesondere als Folienetiketten ausgebildeten Verpackungsetiketten in mindestens einer Spritzgussform während des Spritzgussvorgangs an dem Spritzgussteil angebunden wird. Bevorzugt werden die Substrate dabei mittels der Handhabungsvorrichtung aus dem Magazinen entnommen und mittels eines Verstellarms in die Spritzgussform eingelegt.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine Seitenansicht einer Zuführvorrichtung mit zwei Magazinen, die entlang von linearen, winklig zueinander angeordneten und übereinander angeordneten Bahnen verstellbar sind,
- Fig. 2: eine perspektivische Ansicht der Zuführvorrichtung gemäß Fig. 1,
- Fig. 3: eine perspektivische Ansicht der Zuführvorrichtung gemäß den Fig. 1 und 2, aus der die Beladepositionen zu erkennen sind,
- Fig. 4: eine Seitenansicht der Zuführvorrichtung, bei der eine gemeinsame Entnahmeposition zu erkennen ist,
- Fig. 5: eine Ansicht der Zuführvorrichtung von oben,
- Fig. 6: eine Zuführvorrichtung gemäß dem hausinternen Stand der Technik, bei der zwei Magazine linear in einer gemeinsamen Arbeitsebene verstellbar sind und
- Fig. 7: eine Zuführvorrichtung gemäß dem hausinternen Stand der Technik, bei der ein erstes Magazin linear und ein zweites Magazin auf einer unstetigen, aus zwei senkrechten Teilbahnen bestehenden Bahn verstellbar ist.

In den Figuren sind gleiche Bauteile und Bauteile mit der gleichen Funktion mit den gleichen Bezugszeichen gekennzeichnet.

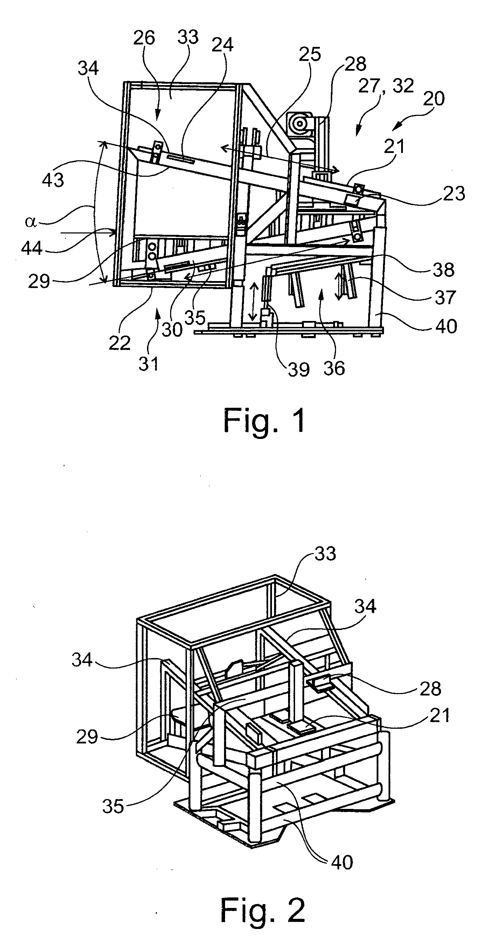

Im Folgenden wird anhand der Fig. 1 bis 5 eine bevorzugte Ausführungsform einer Zuführvorrichtung 20 für flache Substrate beschrieben.

Die Zuführvorrichtung 20 umfasst zwei relativ zueinander verstellbare Magazine, nämlich ein erstes Magazin 21 und ein zweites Magazin 22. Beide Magazine 21, 22 sind zur Aufnahme von in einer Vertikalrichtung gestapelten flachen Substraten ausgebildet. Das erste Magazin 21 ist auf einem ersten Magazintisch 23 angeordnet, der zusammen mit dem ersten Magazin 21 entlang einer ersten linearen Bahn 24 in den Pfeilrichtungen 25 zwischen einer ersten Beladeposition 26 und einer ersten Entnahmeposition 27 verstellbar ist, wobei von einer Handhabungsvorrichtung 28 in der ersten Entnahmeposition 27 Substrate aus dem ersten Magazin 21 entnommen werden können. Wie aus Fig. 1 zu erkennen ist, befindet sich das erste Magazin 21 gerade in der ersten Entnahmeposition 27.

Das zweite Magazin 22, das auf einem zweiten Magazintisch 29 angeordnet ist, ist entlang einer linearen zweiten Bahn 30, die unterhalb der ersten Bahn 24 angeordnet ist und mit dieser in einer nicht eingezeichneten Vertikalebene liegt, zwischen einer zweiten Beladeposition 31 und einer zweiten Entnahmeposition 32 verstellbar, wobei die zweite Entnahmeposition 32 der ersten Entnahmeposition 27 entspricht. Anders ausgedrückt hat die Zuführvorrichtung 20 ausschließlich eine gemeinsame Entnahmeposition 27, 32 für beide Magazine 21, 22. Die beiden Beladepositionen 26, 31 sind exakt übereinander angeordnet und befinden sich in einem an drei Seiten umfangsgeschlossenen Schutzraum 33, wobei die Seitenwände des Schutzraums 33 aus transparentem Plexiglas ausgebildet sind.

Wie sich insbesondere aus Fig. 1 ergibt, schließen die beiden Bahnen 24, 30 einen Winkel α von etwa 30° ein. Ferner ist aus Fig. 1 zu entnehmen, dass der Winkel (nicht eingezeichnet) zwischen jeder Bahn 24, 30 und einer Horizontalebene α/2 = 15° beträgt - die Bahnen 24, 30 sind also symmetrisch zu einer horizontalen Symmetrieebene (nicht gezeigt) ausgebildet. Der erste Magazintisch 23 ist unterhalb der ersten Bahn 24 angeordnet und schließt wie das erste Magazin 21 mit der Horizontalen einen Winkel α/2 = 15° ein, sodass der erste Magazintisch 23 und folglich auch das erste Magazin 21 in jeder Position entlang der ersten Bahn 24 horizontal ausgerichtet ist.

Analog ist der zweite Magazintisch 29 mit dem zweiten Magazin 22 angeordnet. Der zweite Magazintisch 29 befindet sich oberhalb der zweiten Bahn 30 und schließt mit der Horizontalen einen Winkel von α/2 = 15° ein. Durch die Anordnung des ersten Magazintisches 23 unterhalb der ersten Bahn 24 und die Anordnung des zweiten Magazintisches 29 oberhalb der zweiten Bahn 30 wird sichergestellt, dass die Magazine 21, 22 in eine gemeinsame Entnahmeposition 27, 32 verfahren werden können, die in dem gezeigten Ausführungsbeispiel in axialer Richtung betrachtet in einer Horizontalebene liegt, die von den beiden Beladepositionen 26, 31 gleich weit beabstandet ist.

Zur Realisierung der linearen Bahnen 24, 30 ist jeder Magazintisch 23, 29 in jeweils zwei parallelen Führungsschienen 34, 35 geführt, wobei jeweils ein Paar von Führungsschienen 34, 35 eine Bahn 24, 30 definiert. Zum Verstellen der Magazintische 23, 29 mit ihrem jeweiligen Magazin 21, 22 entlang der zugehörigen Bahn 24, 30 sind pneumatische Linearantriebe 43, 44 vorgesehen.

Unterhalb der Bahnen 24, 30 befindet sich unterhalb der gemeinsamen Entnahmeposition 27, 32 ein Substratanhubmechanismus 36 (Labelaushub). Der Substratanhubmechanismus 36 weist einen linear entlang der Pfeilrichtungen 37 verstellbaren Anhubbolzen 38 auf, mit dem die in den Magazinen 21, 22 vertikal gestapelten Substrate nach oben in Richtung Handhabungsvorrichtung 28 gedrückt werden können, sodass letztere ein oberes Substrat immer an der selben Stelle entnehmen kann - unabhängig vom Füllstand des Magazins. Nach der Entnahme fährt der Anhubbolzen 38 wieder nach unten und der Substratstapel senkt sich durch die Schwerkraft ab.

Der Substratanhubmechanismus 36 ist mit einem Schwenkhub 39 ausgestattet, mit dem der Substratanhubmechanismus 37 von der gezeigten Parkposition in eine Arbeitsposition unmittelbar unterhalb des jeweiligen Magazins 21, 22 in der gemeinsamen Entnahmeposition 27, 32 verschwenkbar ist. Dem Schwenkhub bzw. dem Substratanhubmechanismus 36 ist eine nicht gezeigte Steuerung zugeordnet, die den Substratanhubmechanismus 36 nur dann in seine untere Parkposition verschwenkt, wenn das untere, zweite Magazin 22 in die gemeinsame Entnahmeposition 27, 32 verfahren und aus dieser wieder herausverfahren wird. Ein Verschwenken beim Ein- und Ausfahren des ersten Magazins 21 ist aufgrund ausreichend großer Platzverhältnisse nicht notwendig. Wie sich aus den Figuren ergibt, sind die Führungsschienenpaare 34, 35 sowie der Substratanhubmechanismus 36 an einem gemeinsamen Halterahmen 40 festgelegt.

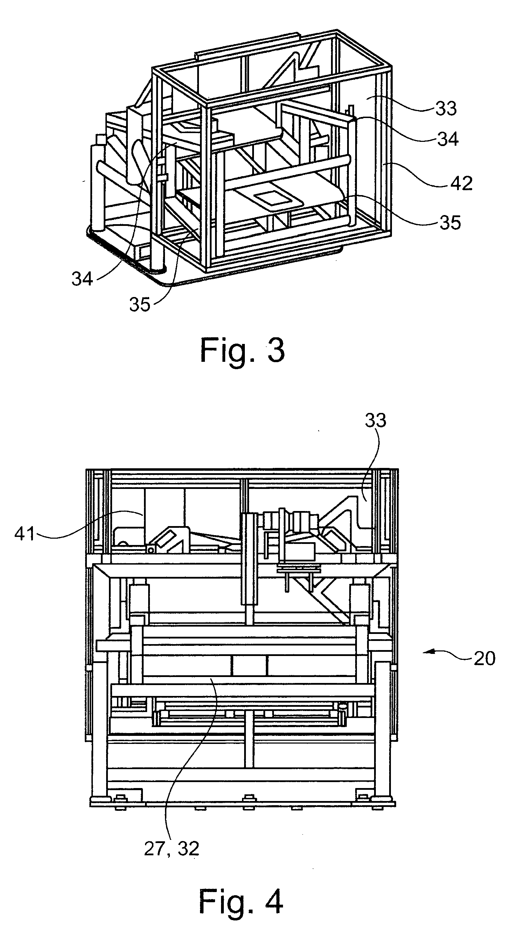

In Fig. 4 ist eine Ansicht der Zuführvorrichtung 20 mit Blick auf die gemeinsame Entnahmeposition 27, 32 gezeigt. Zu erkennen ist, dass in einer zwischen der Entnahmeposition 27, 32 und den davon beabstandeten Beladepositionen 26, 31 befindlichen Vertikalebene ein Schutzschieber 41 angeordnet ist, der aus zwei synchron arbeitenden Platten besteht, von denen aus Übersichtlichkeitsgründen nur eine einzige, mit dem Bezugszeichen 41 gekennzeichnete Platte zu sehen ist. Der Schutzschieber 41 wird von der gezeigten Öffnungsposition in der Vertikalebene in eine Schließ-, d.h. Schutzposition axial zwischen den Beladepositionen 26, 31 und der gemeinsamen Entnahmeposition 27, 32 verschwenkt, sobald die Magazine 21, 22 ihre jeweilige Zielposition erreicht haben. Der Schutzschieber 41 verhindert ein Eingreifen einer Bedienperson in einen Arbeitsbereich der Zuführvorrichtung.

In Fig. 3 ist ein als Tür ausgebildetes hinteres Öffnungselement 42 des Schutzraums 33 zu erkennen. Dieses ist während des Betriebs der Zuführvorrichtung 20 solange verriegelt, bis die beiden Magazine 21, 22 ihre jeweilige Zielposition erreicht haben und in der Folge der Schutzschieber 41 geschlossen ist. Nur dann lässt sich das Öffnungselement 42, in diesem Ausführungsbeispiel von Hand, öffnen (hier aufschwenken) um das jeweils in seiner Beladeposition 26, 31 befindliche Magazin 21, 22 sicher beladen zu können.

## Patentansprüche

1. Zuführvorrichtung für flache Substrate wie Etiketten oder dgl., insbesondere zum Zuführen von flachen Substraten in eine Spritzgussvorrichtung, mit einem ersten Magazin (21) für flache Substrate und einem zweiten Magazin (22) für-flache Substrate, wobei das erste Magazin (21) zwischen einer ersten Beladeposition (26) und einer ersten Entnahmeposition (27) entlang einer ersten stetigen, insbesondere linearen, Bahn (24) verstellbar ist und das zweite Magazin (22) zwischen einer zweiten Beladeposition (31) und einer zweiten Entnahmeposition (32) entlang einer mit der ersten Bahn (24) einen Winkel a einschließenden zweiten stetigen, insbesondere linearen, Bahn (30) verstellbar ist,
**dadurch gekennzeichnet,**
**dass** die erste Beladeposition (26) und die zweite Beladeposition (31) in vertikaler Richtung beabstandet sind, und dass die erste Entnahmeposition (27) und die zweite Entnahmeposition (32) eine gemeinsame Entnahmeposition sind, und dass der gemeinsamen Entnahmeposition (32) eine Handhabungsvorrichtung zum Entnehmen der Substrate zugeordnet ist.

2. Zuführvorrichtung nach Anspruch 1,
**dadurch gekennzeichnet,**
**dass** die erste Beladeposition (26) unmittelbar oberhalb der zweiten Beladeposition (31) angeordnet ist.

3. Zuführvorrichtung nach einem der vorhergehenden Ansprüche,
**dadurch gekennzeichnet,**
**dass** der Winkel a aus einem Wertebereich zwischen etwa 1° und etwa 179°, vorzugsweise zwischen etwa 10° und etwa 100°, insbesondere zwischen etwa 20° und etwa 60°, vorzugsweise zwischen etwa 25° und etwa 45° gewählt ist.

4. Zuführvorrichtung nach einem der vorhergehenden Ansprüche,
**dadurch gekennzeichnet,**
**dass** die Magazine (21, 22) derart angeordnet sind, dass sie zumindest in ihrer jeweiligen Beladeposition (26, 31) und/oder Entnahmeposition (27, 32) horizontal ausgerichtet sind.

5. Zuführvorrichtung nach einem der vorhergehenden Ansprüche,
**dadurch gekennzeichnet,**
**dass** die erste Bahn (24) und die zweite Bahn (30) jeweils einen Winkel a/2 mit einer Horizontalebene einschließen.

6. Zuführvorrichtung nach einem der vorhergehenden Ansprüche,
**dadurch gekennzeichnet,**
**dass** jedem Magazin (21, 22) zum, insbesondere linearen Verstellen, jeweils ein Linearantrieb, insbesondere eine Kolben-Zylindereinheit, zugeordnet ist.

7. Zuführvorrichtung nach einem der vorhergehenden Ansprüche,
**dadurch gekennzeichnet,**
**dass** mindestens ein Schutzschieber (41) vorgesehen ist, der zwischen einer Öffnungsposition und einer Schließposition, vorzugsweise in einer Vertikalebene verstellbar, vorzugsweise verschwenkbar, ist, und dass sich der Schutzschieber (41) in seiner Schließposition axial zwischen den Beladepositionen (26, 31) und der mindestens einen Entnahmeposition (27, 32) angeordnet ist.

8. Zuführvorrichtung nach einem der vorhergehenden Ansprüche,
**dadurch gekennzeichnet,**
**dass** die Entnahmepositionen (27, 32) in einem Schutzraum (33) mit einem verriegelbaren Öffnungselement (42), insbesondere einer Tür, angeordnet sind und dass vorzugsweise das Öffnungselement (42) im Betrieb der Zuführeinrichtung entriegelt ist, wenn sich der Schutzschieber (41) in seiner Schließposition befindet.

9. Zuführvorrichtung nach einem der Ansprüche 1 bis 8,
**dadurch gekennzeichnet,**
**dass** der gemeinsamen Entnahmeposition (27, 32) ein Substratanhubmechanismus (36) zugeordnet ist, mit dem die im ersten oder zweiten Magazin (21, 22) befindlichen Substrate anhebbar sind.

10. Zuführvorrichtung nach Anspruch 9,
**dadurch gekennzeichnet,**
**dass** der Substratanhubmechanismus (36) zwischen einer Arbeitsposition und einer Parkposition verstellbar, insbesondere verschwenkbar, ist.

11. Zuführvorrichtung nach Anspruch 10,
**dadurch gekennzeichnet,**
**dass** dem Substratanhubmechanismus (36) eine Steuerung zugeordnet ist, die derart ausgebildet ist, dass der Substratanhubmechanismus (36) nur beim Verstellen des Magazins (21, 22) verstellt wird, dessen Beladeposition (26, 31) die unterste Beladeposition (26, 31) ist.

12. Zuführvorrichtung nach einem der vorhergehenden Ansprüche,
**dadurch gekennzeichnet,**
**dass** eine Handhabungsvorrichtung (28) zum Entnehmen von flachen Substraten aus dem ersten und/oder dem zweiten Magazin (21, 22) vorgesehen ist.

13. Spritzgussvorrichtung, insbesondere zum Herstellen von Kunststoffbehältern, umfassend mindestens eine mehrteilige Spritzgussform und eine Zuführvorrichtung (20) für flache Substrate nach einem der vorhergehenden Ansprüche.

## Claims

1. A feed device for flat substrates such as labels or the like, particularly for feeding flat substrates into an injection moulding device, featuring a first magazine (21) for flat substrates and a second magazine (22) for flat substrates, wherein the first magazine (21) can be adjusted between a first loading position (26) and a first withdrawal position (27) along a first constant, particularly linear path (24) and the second magazine (22) can be adjusted between a second loading position (31) and a second withdrawal position (32) along a second constant, particularly linear path (30) that includes an angle a with the first path (24),
**characterized in**
**that** the first loading position (26) and the second loading position (31) are spaced apart from one another in the vertical direction, in that the first withdrawal position (27) and the second withdrawal position (32) are a common withdrawal position, and in that a handling device for withdrawing the substrates is assigned to the common withdrawal position (32).

2. The feed device according to Claim 1, **characterized in that** the first loading position (26) is arranged directly above the second loading position (31).

3. The feed device according to one of the preceding claims, **characterized in that** the angle a is chosen in a range between about 1° and about 179°, preferably between about 10° and about 100°, especially between about 20° and about 60°, particularly between about 25° and about 45°.

4. The feed device according to one of the preceding claims, **characterized in that** the magazines (21, 22) are arranged in such a way that they are aligned horizontally at least in their respective loading position (26, 31) and/or withdrawal position (27, 32).

5. The feed device according to one of the preceding claims, **characterized in that** the first path (24) and the second path (30) respectively include an angle a/2 with a horizontal plane.

6. The feed device according to one of the preceding claims, **characterized in that** a linear drive, particularly a piston-cylinder unit, is respectively assigned to each magazine (21, 22) for its particularly linear adjustment.

7. The feed device according to one of the preceding claims, **characterized in that** at least one safety gate (41) is provided and can be adjusted, preferably pivoted, between an open position and a closed position, preferably in a vertical plane, and **in that** the safety gate (41) is in its closed position arranged axially between the loading positions (26, 31) and the at least one withdrawal position (27, 32).

8. The feed device according to one of the preceding claims, **characterized in that** the withdrawal positions (27, 32) are arranged in a safety compartment (33) with a lockable opening element (42), particularly a door, and **in that** the opening element (42) is preferably unlocked during the operation of the feed device when the safety gate (41) is in its closed position.

9. The feed device according to one of Claims 1 to 8, **characterized in that** a substrate lifting mechanism (36), by means of which the substrates situated in the first or second magazine (21, 22) can be lifted, is assigned to the common withdrawal position (27, 32).

10. The feed device according to Claim 9, **characterized in that** the substrate lifting mechanism (36) can be adjusted, particularly pivoted, between a working position and a parking position.

11. The feed device according to Claim 10, **characterized in that** a control is assigned to the substrate lifting mechanism (36) and designed in such a way that the substrate lifting mechanism (36) is only adjusted during an adjustment of the magazine (21, 22), the loading position (26, 31) of which is the lowermost loading position (26, 31).

12. The feed device according to one of the preceding claims, **characterized in that** a handling device (28) is provided for withdrawing flat substrates from the first and/or the second magazine (21, 22).

13. An injection moulding device, particularly for manufacturing plastic containers, comprising at least one composite injection mould and a feed device (20) for flat substrates according to one of the preceding claims.

## Revendications

1. Dispositif d'alimentation pour des substrats plats comme des étiquettes ou analogues, en particulier pour l'alimentation de substrats plats dans un dispositif de moulage par injection, avec un premier magasin (21) pour des substrats plats et un deuxième magasin (22) pour des substrats plats, dans lequel le premier magasin (21) peut être déplacé le long d'une première trajectoire continue (24), en particulier linéaire, entre une première position de chargement (26) et une première position d'enlèvement (27) et le deuxième magasin (22) peut être déplacé le long d'une deuxième trajectoire continue (30), en particulier linéaire, formant un angle a avec la première trajectoire (24), entre une deuxième position de chargement (31) et une deuxième position d'enlèvement (32), **caractérisé en ce que** la première position de chargement (26) et la deuxième position de chargement (31) sont espacées en direction verticale, **en ce que** la première position d'enlèvement (27) et la deuxième position d'enlèvement (32) sont une position d'enlèvement commune, et **en ce qu'**un dispositif de manutention est associé à la position d'enlèvement commune (32) pour l'enlèvement des substrats.

2. Dispositif d'alimentation selon la revendication 1, **caractérisé en ce que** la première position de chargement (26) est disposée immédiatement au-dessus de la deuxième position de chargement (31).

3. Dispositif d'alimentation selon l'une quelconque des revendications précédentes, **caractérisé en ce que** l'angle a est choisi dans une plage de valeurs comprise entre environ 1° et environ 179°, de préférence entre environ 10° et environ 100°, en particulier entre environ 20° et environ 60°, et de préférence encore entre environ 25° et environ 45°.

4. Dispositif d'alimentation selon l'une quelconque des revendications précédentes, **caractérisé en ce que** les magasins (21, 22) sont disposés de telle manière qu'ils soient orientés horizontalement au moins dans leur position de chargement (26, 31) et/ou leur position d'enlèvement (27, 32) respective.

5. Dispositif d'alimentation selon l'une quelconque des revendications précédentes, **caractérisé en ce que** la première trajectoire (24) et la deuxième trajectoire (30) forment chacune un angle a/2 avec un plan horizontal.

6. Dispositif d'alimentation selon l'une quelconque des revendications précédentes, **caractérisé en ce qu'**un entraînement linéaire, en particulier une unité à piston-cylindre, est associé à chaque magasin (21, 22) pour le déplacement en particulier linéaire.

7. Dispositif d'alimentation selon l'une quelconque des revendications précédentes, **caractérisé en ce qu'**il est prévu au moins un tiroir de protection (41), qui peut se déplacer, de préférence pivoter, de préférence dans un plan vertical, entre une position d'ouverture et une position de fermeture, et **en ce que** le tiroir de protection (41) est disposé dans sa position de fermeture axialement entre les positions de chargement (26, 31) et ladite au moins une position d'enlèvement (27, 32).

8. Dispositif d'alimentation selon l'une quelconque des revendications précédentes, **caractérisé en ce que** les positions d'enlèvement (27, 32) sont disposées dans une chambre de protection (33) avec un élément d'ouverture verrouillable (42), en particulier une porte, et **en ce que** de préférence l'élément d'ouverture (42) est déverrouillé pendant le fonctionnement du dispositif d'alimentation, lorsque le tiroir de protection (41) se trouve dans sa position de fermeture.

9. Dispositif d'alimentation selon l'une quelconque des revendications 1 à 8, **caractérisé en ce qu'**un mécanisme de levage des substrats (36) est associé à la position d'enlèvement commune (27, 32), avec lequel les substrats se trouvant dans le premier ou dans le deuxième magasin (21, 22) peuvent être soulevés.

10. Dispositif d'alimentation selon la revendication 9, **caractérisé en ce que** le mécanisme de levage des substrats (36) peut se déplacer, en particulier pivoter entre une position de travail et une position de rangement.

11. Dispositif d'alimentation selon la revendication 10, **caractérisé en ce qu'**une commande est associée au mécanisme de levage des substrats (36), et est réalisée de telle manière que le mécanisme de levage des substrats (36) ne se déplace que lors du déplacement du magasin (21, 22), dont la position de chargement (26, 31) est la position de chargement la plus basse (26, 31).

12. Dispositif d'alimentation selon l'une quelconque des revendications précédentes, **caractérisé en ce qu'**il est prévu un dispositif de manutention (28) pour l'enlèvement de substrats plats hors du premier et/ou du deuxième magasin (21, 22).

13. Dispositif de moulage par injection, en particulier pour la fabrication de récipients en matière plastique, comprenant au moins un moule de moulage par injection en plusieurs parties et un dispositif d'alimentation (20) pour des substrats plats selon l'une quelconque des revendications précédentes.
